(19) **Europäisches Patentamt / European Patent Office / Office européen des brevets**

(11) **EP 1 865 607 B1**

(12) **EUROPEAN PATENT SPECIFICATION**

(45) Date of publication and mention of the grant of the patent:
**25.04.2012 Bulletin 2012/17**

(51) Int Cl.:
*H04B 1/10* (2006.01)   *H04B 7/015* (2006.01)
*H04B 7/08* (2006.01)

(21) Application number: **06730534.2**

(22) Date of filing: **29.03.2006**

(86) International application number:
**PCT/JP2006/306586**

(87) International publication number:
**WO 2006/106788 (12.10.2006 Gazette 2006/41)**

(54) **REDUCING APPARATUS AND METHOD, AND RECEIVING APPARATUS**

VERRINGERUNGSVORRICHTUNG UND  VERFAHREN UND EMPFANGSVORRICHTUNG

APPAREIL ET PROCEDE DE REDUCTION ET APPAREIL RECEPTEUR

(84) Designated Contracting States:
**DE FR GB**

(30) Priority: **31.03.2005   JP 2005105365**

(43) Date of publication of application:
**12.12.2007   Bulletin 2007/50**

(73) Proprietor: **FUJITSU TEN LIMITED**
**Kobe-shi**
**Hyogo 652-8510 (JP)**

(72) Inventors:
 • **INOUE, Yoshiaki,**
 **FUJITSU TEN LIMITED**
 **Kobe-shi,**
 **Hyogo 652-8510 (JP)**
 • **HORIMOTO, Manabu,**
 **FUJITSU TEN LIMITED**
 **Kobe-shi,**
 **Hyogo 652-8510 (JP)**

 • **TANIGUCHI, Isao,**
 **FUJITSU TEN LIMITED**
 **Kobe-shi,**
 **Hyogo 652-8510 (JP)**
 • **TAKAYAMA, Kazuo,**
 **FUJITSU TEN LIMITED**
 **Kobe-shi,**
 **Hyogo 652-8510 (JP)**

(74) Representative: **Skone James, Robert Edmund**
**Gill Jennings & Every LLP**
**The Broadgate Tower**
**20 Primrose Street**
**London EC2A 2ES (GB)**

(56) References cited:
**JP-A- 2005 167 719     JP-U- 02 093 845**
**US-A1- 2005 053 177**

**Description**

TECHNICAL FIELD

The present invention relates to a reducing apparatus and method for reducing multipath noise which is suffered in radio wave propagation in receiving radio waves which are transmitted after being modulated by a constant amplitude modulation method.

BACKGROUND ART

Conventionally, it is known that a multipath reducing apparatus 1 is used in reception of a radio wave being transmitting after being modulated by a constant amplitude modulation method in order to reduce multipath noise which the radio wave receives during its propagation. The multipath noise reducing apparatus 1 includes an adaptive digital filter (hereinafter, abbreviated as an "ADF") 2. US 2005/0053177 shows an example of such an apparatus. A receiving apparatus 3 comprising the ADF 2 as the multipath noise reducing apparatus provides a frequency modulation (FM) method or a phase modulation (PM) method, and is originally used for receiving a radio wave having a constant amplitude, or the like. A frequency-modulated radio wave or a phase-modulated radio wave is normally received with constant amplitude, but a change in amplitude is produced due to an effect of the multipath when the radio wave is received in a state where its path is separated into a plurality of paths by reflection or the like. In the receiving apparatus 3, a received signal is converted from an analog signal to a digital signal by an analog/digital converter (hereinafter, abbreviated as an "AD converter") 4, and the multipath noise on the received signal is reduced by a digital signal processing in the ADF 2. The received signal having the multipath noise reduced in the ADF 2 is detected by a wave detector 5, and the modulated signal is demodulated.

A frequency-modulated radio wave, which is an FM broadcast wave transmitted using a frequency range of, for example, a very high frequency (VHF), is received by an antenna 6, and a radio frequency (RF) signal corresponding to a field strength is outputted. The radio frequency signal is processed in an analog state in an analog receiving processing portion 7 including an RF portion for a radio frequency amplification and a MIX portion for a frequency conversion, and is outputted as, for example, an intermediate frequency (IF) signal having about 10.7 MHz. The IF signal is converted into a digital signal by the AD converter 4 and is supplied to the ADF 2.

The ADF 2 includes a variable filter portion 8, a coefficient memory 9, a filter coefficient calculating unit 10, and an envelope calculating unit 11. In the ADF 2, an amplitude changed portion of the IF signal converted into a digital signal is detected by the envelope calculating unit 11, and a filter coefficient is calculated by the filter coefficient calculating unit 10 so as to correct the amplitude changed portion, and is stored in the coefficient memory 9. The variable filter portion 8 uses the filter coefficient stored in the coefficient memory 9 to remove an effect of the multipath to the IF signal.

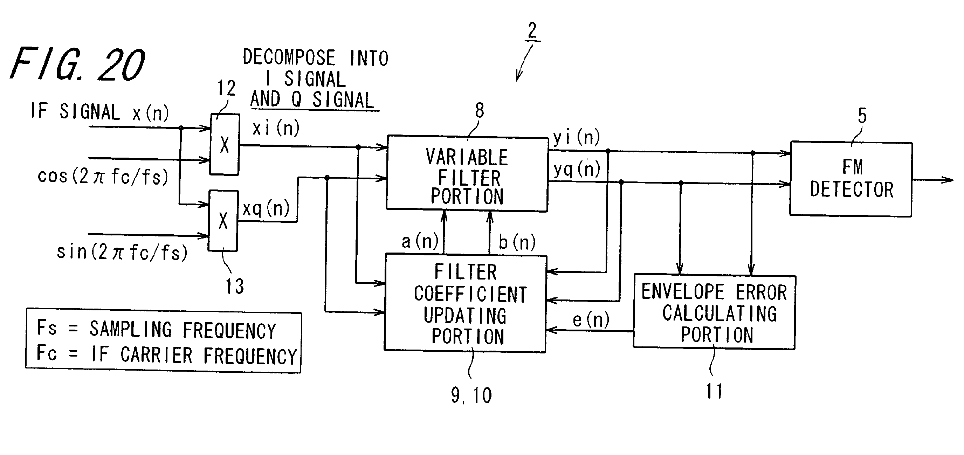

Fig. 20 shows a configuration for a calculating processing for removing a multipath distortion caused by the multipath from an FM signal in the ADF 2. When a sampling frequency is taken as fs, and a carrier frequency of the IF signal is taken as fc, an IF signal x(n) in a digital state to be inputted to the ADF 2 is divided into an I signal xi(n) obtained by multiplying the IF signal x(n) by a cos(2πfc/fs) signal in an I signal dividing unit 12, and a Q signal xq(n) obtained by multiplying the IF signal x(n) by a sin(2nfc/fs) signal in a Q signal dividing unit 13. The I signal xi(n) and Q signal xq(n) are inputted to the variable filter portion 8, the coefficient memory 9, and a filter coefficient updating portion as the filter coefficient calculating unit 10. Filter coefficients a(n) and b(n) are outputted from the filter coefficient updating portion to the variable filter portion 8. In the variable filter portion 8, calculating results obtained by multiplying the inputted I signal xi(n) and Q signal xq(n) by the coefficients a(n) and b(n) are led as outputs yi(n) and yq(n). The outputs yi(n) and yq(n) are inputted to the FM wave detector 5, the filter coefficient updating portion, and an envelope error calculating portion as the envelope calculating unit 11, respectively. In the envelope error calculating portion, an error e(n) is calculated and supplied to the filter coefficient updating portion.

The ADF 2 as shown in Fig. 20 uses a property that an envelope signal of a frequency-modulated received signal which should be originally fixed is changed by the multipath distortion to carry out a processing so as to make an envelope curve fixed, thereby removing a distortion. The output signals yi(n) and yq(n) of the variable filter portion 8 are calculated using the following expressions (1) and (2), and are outputted. Here, an N represents a number of filter taps and the number is -N ≤ k ≤ N.

$$yi(n) = \sum_{k=-N}^{N} \{ak(n) \times i(n - k - N) - bk(n) \times q(n - k -$$

N)} (1)

$$yq(n) = \sum_{k=-N}^{N} \{ak(n) \times q(n - k - N) - bk(n) \times i(n - k -$$

N)} (2)

A filter property capable of removing the multipath distortion can be obtained by as appropriate updating the filter coefficients a(n) and b(n). The filter coefficient updating portion updates the filter coefficients a(n) and b(n) according to the following expressions (3) and (4):

$$ak(n + 1) = ak(n) - \mu e(n) \{xi(n - k - N) yi(n) +$$

xq(n - k - N) yq(n)} (3)

$$bk(n + 1) = bk(n) - \mu e(n) \{xi(n - k - N) yq(n) -$$

xq(n - k - N) yi(n)} (4)

In the expressions (3)' and (4), a constant $\mu$ is called a step size, and is for determining a degree of convergence of an adapting processing. An error e(n) is an error calculated in the envelope error calculating portion, and corresponds to an amplitude changed portion. The ADF 2 operates so as to minimize the envelope curve error, thus making the envelope curve of the IF signal constant. In the envelope curve error calculating portion, the envelope curve error e(n) is calculated using the following expression (5). The above-described operation of an adaptive digital filter is called an LMN algorithm.

$$e(n) = env - A$$
$$env = \sqrt{\{yi(n)^2 + yq(n)^2\}} \quad (5)$$

or

$$env = yi(n)^2 + yq(n)^2$$

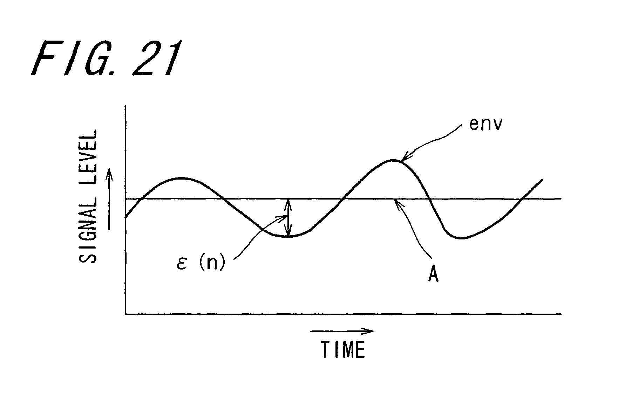

Fig. 21 shows a relationship between the envelope curve error e(n) and the envelope curve signal env which are used in the expression (5). The envelope curve env is changed centering around an envelope curve reference value A. When the filter coefficient of the ADF 2 is controlled so as to remove the multipath noise from an FM signal, the ADF 2 operates so that a liner distortion other than the multipath distortion, which is produced in an intermediate frequency amplifier, is automatically removed.

In a multipath removing filter using the above-described ADF, there is disclosed a technique in which a property of a reflected wave causing the multipath is detected and an initial setting is carried out depending on the detected property (refer to Japanese Examined Patent Publication JP-B2 3354286, for example).

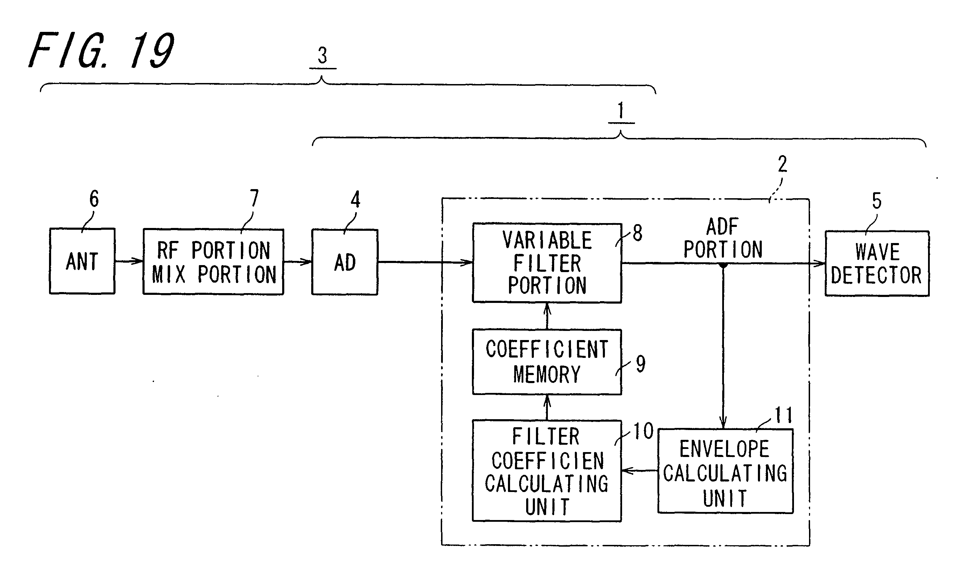

In the multipath noise reducing apparatus 1 as shown in Fig. 19, noise or the like produced based on the multipath in the above-described operation can be removed, but under a radio wave condition described later an operation of the ADF 2 produces a side effect. The side effect means that the ADF 2 operates in a state other than occurrence of the multipath, thereby producing an effect or a change in an original signal, and thus causing a distortion or a sense of discomfort in a sound.

(a) At a time of an overmodulation

At a time of the overmodulation, an amplitude change due to a modulating component is produced in a received signal. The ADF 2 detects the amplitude change and carries out a correcting operation so as to eliminate the amplitude change. Accordingly, a distortion is produced in a sound obtained by a wave detection, or the like, as described later. Further, it is assumed that a state of the overmodulation is caused by the following two factors.

(a1) At a time of inputting an overmodulated received wave, in which a frequency shift amount is increased so as to exceed a maximum bandwidth of the receiving apparatus itself.

(a2) At a time of taking an interference measure in which a bandwidth of the receiving apparatus is controlled so as to remove an interfering wave by an interference measure function of the receiving apparatus under a radio wave condition in which an interference wave is occurring other than a desired receiving wave, and thereby even the frequency shift amount which is not normally regarded as the overmodulation is increased more than the bandwidth.

(b) At a time of a weak electrical field

At a time of the weak electrical field in which a field strength of a received signal is weak, an amplitude change is produced in the received wave by an effect of white noise. The ADF 2 detects the amplitude change and operates, thereby producing a distortion in a sound.

(c) At a time of an antenna switching diversity reception

In order to improve a receiving property such as the multipath, a diversity receiving method is normally advantageous. However, when an antenna switching method is carried out when a diversity reception is carried out, an amplitude change of the received signal is produced in association with the antenna switching, thereby producing a side effect that a sound distortion is produced. The following two cases are assumed as a case in which the antenna switching causes an amplitude change.

(c1) Case in which a difference in a field strength is produced between the antennas to be switched.
(c2) Case in which at least one antenna to be switched has the multipath.

DISCLOSURE OF INVENTION

An object of the invention is to provide a reducing apparatus and method and a receiving apparatus, capable of receiving a radio wave signal in a comfortable manner by overcoming defects existing in technique and performance according to the related art related to reducing a multipath noise by use of an adaptive digital filter.

The invention provides a reducing apparatus comprising:

an adaptive digital filter for reducing an effect of multipath noise on a received signal; and
a determining unit for determining whether a change in coefficient will deteriorate the received signal,
the adaptive digital filter including:

a calculating unit for calculating a coefficient for reducing an effect of multipath noise on the received signal;
an updating unit for updating the calculated coefficient; and
an update allowing unit for suppressing an updating operation by updating unit of the coefficient based on a determined result by the determining unit.

In the invention, it is preferable that the determining unit determines whether an overmodulation is produced in the received signal or not.

In the invention, it is preferable that the determining unit includes a modulation degree detecting unit for detecting a modulation degree from a frequency shift amount of the received signal, and a comparing unit for comparing the modulation degree with a predetermined frequency band.

In the invention, it is preferable that the determining unit determines whether the overmodulation is produced or not, based on an interference measure against an interference wave.

In the invention, it is preferable that the apparatus further comprises an interference wave detecting unit for detecting presence or absence of an interference wave, and a bandpass filter for regulating a passband of the received signal based on the interference wave detected by the interference wave detecting unit, and

the determining unit includes a modulation degree detecting unit for detecting a modulation degree from a frequency shift amount of the received signal, and a comparing unit for comparing the modulation degree with the passband regulated by the bandpass filter.

In the invention, it is preferable that the determining unit determines whether the overmodulation is produced or not in the received signal, based on a signal changed depending on a time constant.

In the invention, it is preferable that the determining unit determines whether or not a field strength of the received signal is a weak electrical field or less.

In the invention, it is preferable that the determining unit includes an electrical field information obtaining unit for obtaining field strength information from the received signal, and a comparing unit for comparing whether the field strength information represents a weak electrical field or not.

In the invention, it is preferable that the determining unit determines presence or absence of an antenna switching in association with a diversity receiving operation.

In the invention, it is preferable that the determining unit determines whether external noise is produced in the received signal or not.

In the invention it is preferable that the apparatus also comprises:

an antenna for receiving a signal; and
a converting unit for converting a received signal into a digital signal.

The invention provides a receiving apparatus for a mobile object comprising the reducing apparatus mentioned above.

In the invention, it is preferable that the receiving apparatus for a mobile object is used for an automotive receiving apparatus.

In the invention, it is preferable that the receiving apparatus for a mobile object is used for a portable receiving apparatus.

The invention provides a reducing method comprising:

a coefficient calculating step for calculating a coefficient for reducing an effect of multipath noise on a signal;
a determining step for determining whether the signal is deteriorated by updating the coefficient;
an updating step for updating the coefficient based on the calculated coefficient; and
an update allowing step for suppressing the updating step of updating the coefficient, based on the determined result.

Preferably the method further comprises:

an overmodulation determining step for determining whether an overmodulation is produced in the signal or not;
a weak electrical field determining step for determining whether or not a field strength of the signal is a weak electrical field or less;
wherein the update allowing step for suppressing the updating step of updating the coefficient based on a determined result by either the overmodulation determining step or the weak electrical field determining step.

In the invention, it is preferable that the overmodulation determining step includes a modulation degree detecting step for detecting a modulation degree from a frequency shift amount of the signal, and a first comparing step for comparing the modulation degree with a passband regulated by a bandpass filter, and

the weak electrical field determining step includes an electrical filed information obtaining step for obtaining a field strength information from the signal, and a second comparing step for comparing whether the field strength information represents a weak electrical field or not.

BRIEF DESCRIPTION OF THE DRAWINGS

Other and further objects, features, and advantages of the invention will be more explicit from the following detailed description taken with reference to the drawings wherein:

Fig. 1 is a block diagram illustrating a schematic configuration of a multipath noise reducing apparatus according to one embodiment of the invention;

Figs. 2A and 2B are waveform diagrams illustrating an example of a side effect of deterioration in distortion at a time of an overmodulation by an ADF of Fig. 1;

Fig. 3 is a block diagram illustrating a schematic configuration of a multipath noise reducing apparatus according to another embodiment of the invention;

Fig. 4 is a block diagram illustrating a schematic configuration of a multipath noise reducing apparatus according to still another embodiment of the invention;

Fig. 5 is a block diagram illustrating a schematic configuration of a multipath noise reducing apparatus according to further still another embodiment of the invention;

Fig. 6 is a block diagram illustrating a schematic configuration of a multipath noise reducing apparatus according to further still another embodiment of the invention;

Fig. 7 is a block diagram illustrating a configuration in which an inverse function of a filter function of a variable BPF is used as a coefficient updating method in an operation of the ADF of diagrams including Fig. 3;

Fig. 8 is a graph illustrating a relationship between an IF signal and a filter function G(f) of a variable BPF;

Fig. 9 is a waveform diagram illustrating a state in which an apparent envelope value viewed from the ADF is fixed by a correcting value K;

Fig. 10A is a waveform diagram illustrating a modulation degree detecting signal outputted at a time of an intermodulation from a modulation degree detector of diagrams including Fig. 1, and Fig. 10B is a waveform diagram illustrating a state in which the modulation degree detecting signal is changed depending on a time constant;

Fig. 11A is a waveform diagram illustrating a modulation degree detecting signal outputted when a multipath noise occurs from a modulation degree detector of Fig. 1 or the like, and Fig. 11B is a waveform diagram illustrating a state in which the modulation degree detecting signal is changed depending on a time constant;

Fig. 12 is a waveform diagram illustrating a time change in a signal level of the IF signal;

Fig. 13 is a graph illustrating that a singular point is produced in a relationship between a level dividing a frequency shift $\Delta f$ by a modulation and amplitude;

Fig. 14 is a table illustrating criteria of ON/OFF in an operation of the ADF;

Fig. 15 is a block diagram illustrating a configuration for carrying out an ON/OFF switching in an operation of the ADF as shown in Fig. 14;

Fig. 16 is a block diagram illustrating a schematic configuration of a multipath noise reducing apparatus according to further still another embodiment of the invention;

Fig. 17 is a graph illustrating a spectrum of an exogenous noise;

Figs. 18A and 18B are views each illustrating a receiving apparatus for a mobile object according to further still another embodiment of the invention;

Fig. 19 is a block diagram illustrating a schematic configuration of a multipath noise reducing apparatus according to the related art;

Fig. 20 is illustrating a configuration for a calculation to remove a multipath distortion produced by an effect of a multipath from an FM signal in the ADF of Fig. 19; and

Fig. 21 is a waveform diagram illustrating a relationship between an envelope error e(n) and an envelope signal env.

BEST MODE FOR CARRYING OUT THE INVENTION

Hereinafter, referring to the drawings, preferred embodiments of the invention will be described in detail.

In a plurality of embodiments, portions corresponding to the embodiment previously described will be denoted by the same reference numerals and the common description will be omitted in order to prevent overlapped descriptions. Furthermore, embodiments each having no overlapped function may be implemented in combination.

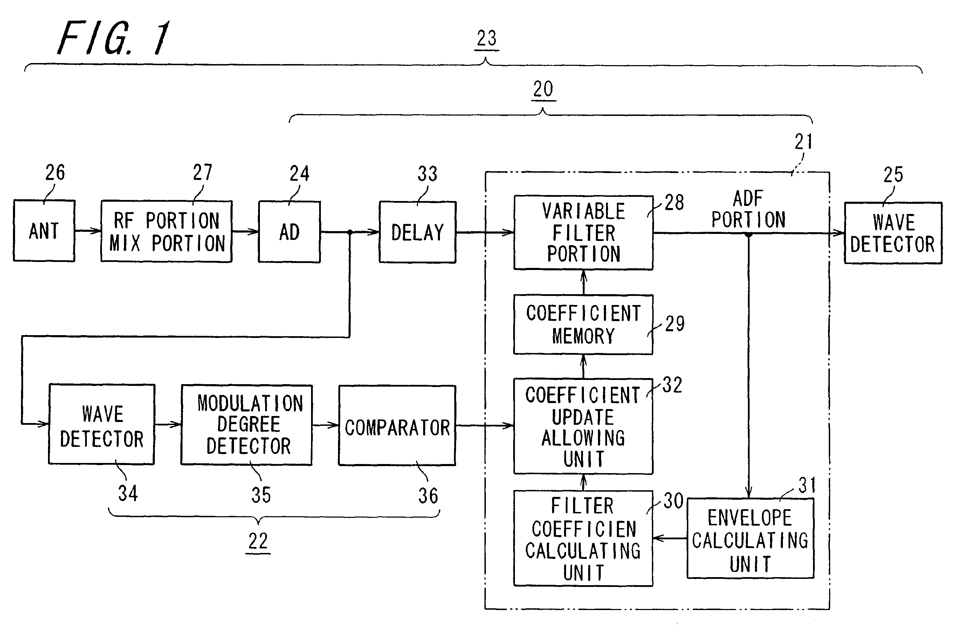

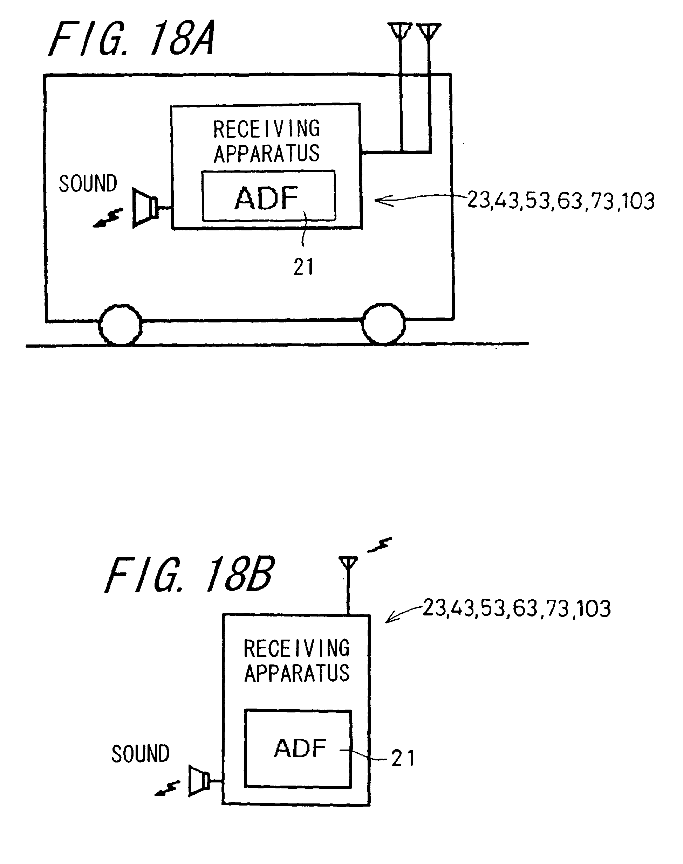

Fig. 1 is a block diagram illustrating a schematic configuration of a multipath noise reducing apparatus 20 according to one embodiment of the invention. The multipath noise reducing apparatus 20 provided in a receiving apparatus 23 includes an adaptive digital filter (hereinafter, abbreviated as an "ADF") 21, and an overmodulation determining unit 22 as a determining unit. The ADF 21 basically acts as an adaptive digital filter similar to an ADF 1 as shown in Fig. 18. The receiving apparatus 23 comprising the ADF 21 as the multipath noise reducing apparatus 20 carries out a modulation using a frequency modulation (FM) or a phase modulation (PM) method, and originally used for receiving a radio wave having constant amplitude, or the like. In the receiving apparatus 23, a received signal is converted from an analog signal to a digital signal by an analog/digital converter (hereinafter, abbreviated as merely an AD converter) 24, and the converted signal is processed with a digital signal in the ADF and thereby a multipath noise is reduced. The received signal having the multipath noise reduced in the ADF 21 is detected by a wave detector 25, and the modulated signal is demodulated therein. The multipath reducing apparatus 20 described above can be realized by a calculating operation by a digital signal processor (DSP) except for the AD converter 24. The DSP and the AD converter 24 may be combined as a semiconductor integrated circuit (IC).

A radio wave received by the receiving apparatus 23, which is, for example, an FM broadcast wave transmitted in a frequency band of a very high frequency (VHF), is received by an antenna (hereinafter, abbreviated as an "ANT") 26, and a radio frequency (RF) signal is outputted depending on a field strength. The radio frequency signal is processed in an analog signal state in an analog receiving processing portion 27 having an RF portion for a high-frequency amplification and the like and a MIX portion for a frequency conversion, and is then outputted as an intermediate frequency (IF) signal of about 10.7 MHz. The IF signal is converted into a digital signal in the AD converter 24.

The ADF 21 includes a variable filter portion 28 and a coefficient memory 29 as an updating unit; a filter coefficient calculating unit 30 and an envelope calculating unit 31 as a calculating unit; and a coefficient update allowing unit 32 as an update allowing unit. In the ADF 21, an amplitude changed portion of the IF signal converted to a digital signal is detected by the envelope calculating unit 31, and a filter coefficient is calculated so that the amplitude change is corrected by the filter coefficient calculating unit 30, and is then stored in the coefficient memory 29. The variable filter portion 28 uses the filter coefficient stored in the coefficient memory 29 to remove an effect of a multipath to the IF signal. The ADF 21 is provided with the coefficient update allowing unit 32 so as to prohibit a coefficient update operation under such a condition that a side effect is produced by an operation of the ADF 21.

A determined result of whether a coefficient update is allowed by the overmodulation determining unit 22 or not is inputted to the coefficient update allowing unit 32 of the ADF 21. In order to adjust a time required for the determination in the overmodulation determining unit 22, in a delay unit 33, a delay (DELAY) is given to the IF signal inputted from the AD converter 24 to the ADF 21. The overmodulation determining unit 22 includes a wave detector 34, a modulation degree detector 35 as a modulation degree detecting unit, and a comparator 36 as a comparing unit. The wave detector 34 detects the IF signal of a digital signal converted by the AD converter 24, with respect to a frequency, and the modulation degree detector 35 detects a modulation degree from a frequency shift amount. The comparator 36 compares the detected modulation degree with a predetermined reference, determines that an overmodulation is produced when the modulation degree exceeds the reference, and prohibits a coefficient update. The coefficient update can be prohibited by, for example, setting a flag. When the coefficient update is prohibited, for example, the filter coefficient calculating unit 30 recognizes the set flag, and does not calculate a new coefficient. Note that when a coefficient calculation has been already started, the calculated result is stored in a coefficient memory 9, and is used for a filter calculation in the variable filter portion 28 after the coefficient update has been prohibited. As a result, the variable filter 28 is fixed to a coefficient calculated just after the coefficient update has been prohibited. Note that an output of the delay unit 33 may be directly inputted to the wave detector 25 by bypassing the ADF 21 instead of by prohibiting the coefficient update. That is, an effect of an operation of the adaptive digital filter may be suppressed at least more than usual.

A modulation degree of a frequency-modulated radio signal can be represented by comparing a frequency shift amount of the received signal with a standard frequency shift amount. In an FM broadcast or the like, for example, a frequency shift amount of 75 kHz corresponds to a modulation degree of 100%. However, in the receiving apparatus 23, a receiving frequency bandwidth is set to, for example, 150 kHz in order to prevent an effect on the received signal. Therefore, even though an overmodulation exceeding 100% is produced, the immediate effect is not always produced. However, when the overmodulation approaches 200%, a filter property which determines the receiving frequency bandwidth becomes uneven, thereby increasing an effect of the overmodulation.

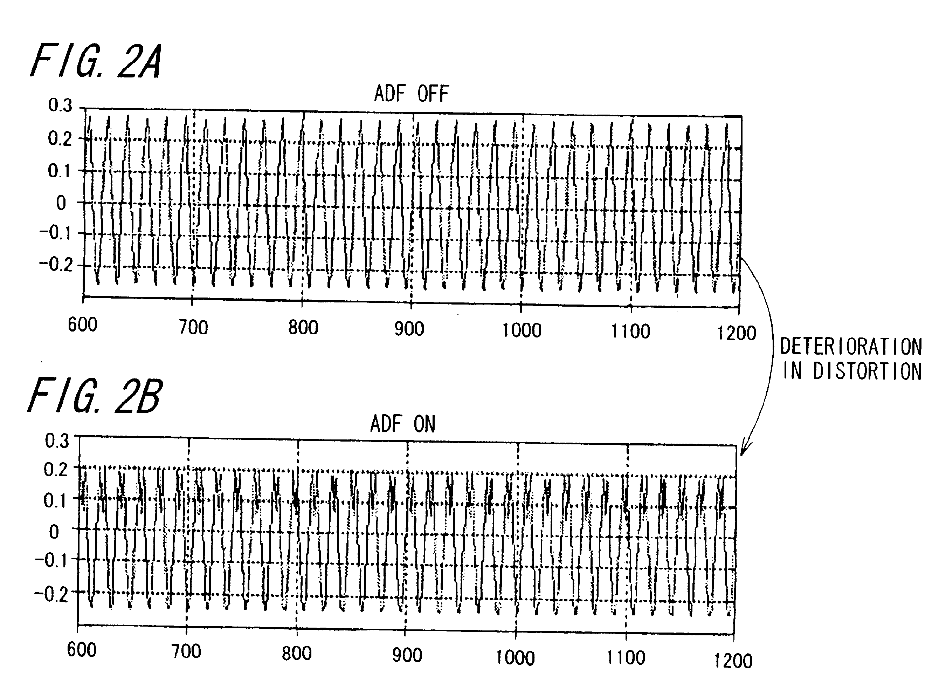

Figs. 2A and 2B show an example of an effect of a multipath noise reduction, and an example of a side effect of deterioration in distortion at a time of an overmodulation, respectively. Fig. 2A shows a case in which the ADF 21 is not operated, and Fig. 2B shows a case in which the ADF 21 is operated. At a time of the overmodulation, an operation of the ADF 21 results in deterioration in distortion. In the multipath reducing apparatus 20 of Fig. 1, the operation of the ADF 21 is turned off when the overmodulation is detected, and thereby the multipath noise reduction and prevention of the corresponding deterioration in a distortion property at a time of the overmodulation can be achieved at the same time.

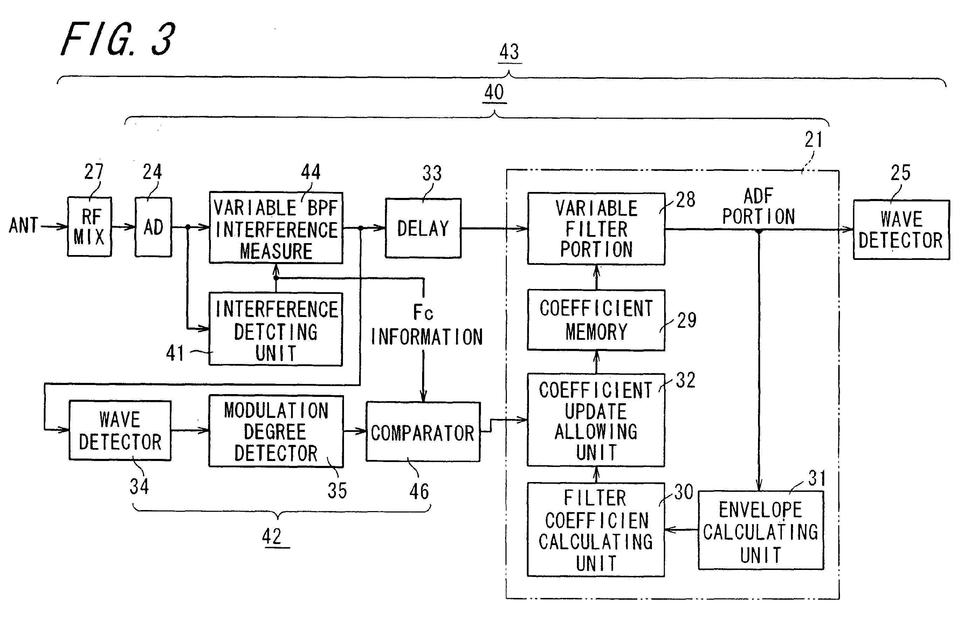

Fig. 3 shows a schematic configuration of a multipath noise reducing apparatus 40 according to another embodiment of the invention. The multipath noise reducing apparatus 40 provided in the receiving apparatus 43 includes an interference detecting unit 41 and an overmodulation determining unit 42 as a determining unit, in place of the overmodulation determining unit 22 of the multipath noise reducing apparatus 20 of Fig. 1. The receiving apparatus 43 including the multipath noise reducing apparatus 40 can regulate a bandwidth of the IF signal by a variable bandpass filter (hereinafter, abbreviated as a "variable BPF") 44, and take an interference measure against an adjacent interfering wave. Presence or absence of the adjacent interfering wave is detected by the interference detecting unit 41. The interference detecting unit 41 is realized by, for example, a notch filter for partially passing a frequency out of a maximum bandwidth of the receiving apparatus 43. The variable BPF 44 can regulate a pass-bandwidth to prevent the interference, when the adjacent interfering wave is detected. The variable BPF 44 and the interference detecting unit 41 as described above constitute an interference measure block. When the receiving apparatus 43 is installed in a mobile object such as a vehicle, the block is effective in a case in which an interference measure is taken by an adjacent station under a radio wave condition that a receiving circumstance is constantly changed.

The overmodulation determining unit 42 includes the wave detector 34, the modulation degree detector 35, and the comparator 46 as the comparing unit. The comparator 46 determines whether a modulation degree detected in the modulation degree detector 35 with respect to the IF signal which passes through the variable BPF 44 and is detected by the wave detector 34 is overmodulated or not, based on cutoff frequency information Fc of the variable BPF 44 for regulating a band based on the adjacent interference wave detected by the interference detecting unit 41. When the comparator 46 determines that the overmodulation is detected, the operation of the ADF 21 is prohibited. That is, since the cutoff frequency information Fc is changed depending on a state of the adjacent interference, the Fc is adapted to be detected.

That is, the overmodulation determining unit 22 recognizes a state of an overmodulation by comparing a modulation degree of a desired signal with a previously known bandwidth of the receiving apparatus 23, and carries out coefficient control for prohibiting the operation of the ADF 21, or the like. When an interfering measure is taken as in a case of the receiving apparatus 43, a bandwidth of the receiving apparatus 43 is changed. For example, assuming that a maximum band width of the receiving apparatus 43 is 150 MHz, and a modulation degree is 75 kHz/deviation when receiving an FM broadcast of 98.1 MHs. In this case, the interference detecting unit 41 detects the interference, and the variable BPF 44 narrows the bandwidth, for example, from 150 kHz to 50 kHz, when an interference station is present at a frequency of 98.3 MHz. In this case, even though the overmodulation is not originally produced, an effect of the variable BPF 44 results in a distortion of the desired signal, and the distortion is further increased when the ADF 21 is operated. At this time, when the ADF is controlled by comparing the Fc information of the variable BPF 44 with the modulation degree, deterioration in a signal distortion can be prevented, allowing an interference measure function and a multipath reducing function at the same time. When presence of the adjacent interference wave having a wide band is detected by the interference detecting unit 41, BW control for narrowing a frequency band BW of the variable BPF 44 is carried out.

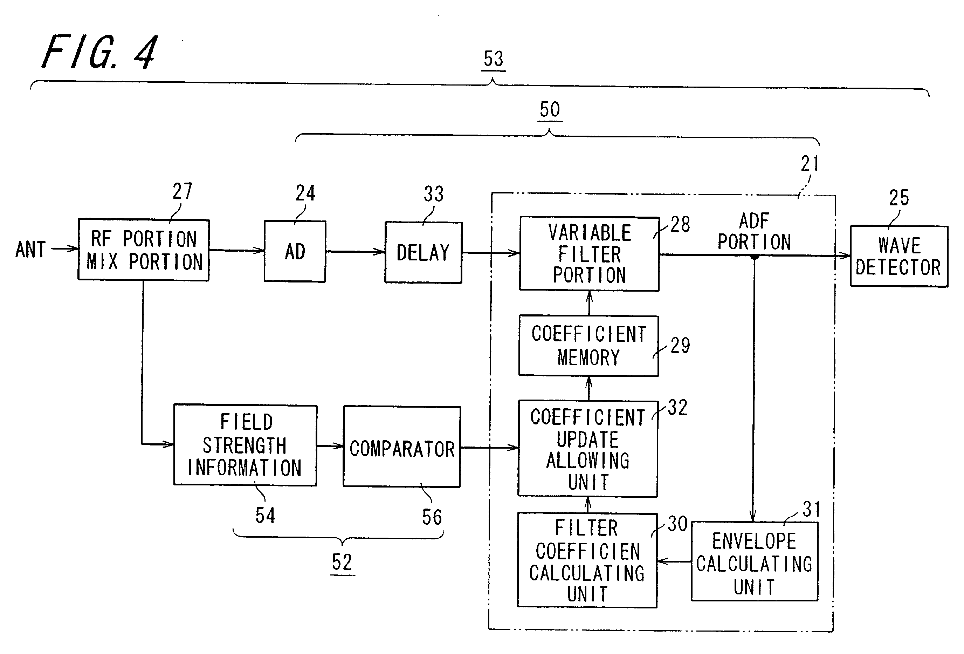

Fig. 4 shows a schematic configuration of a multipath noise reducing apparatus 50 as a reducing apparatus according to still another embodiment of the invention. In the multipath noise reducing apparatus 50 provided in a receiving apparatus 53, a weak electrical field determining unit 52 as a determining unit is used in place of the overmodulation determining unit 21 of the multipath noise reducing apparatus 20 of Fig. 1. The receiving apparatus 53 generates field strength information for automatic gain control (AGC), in the analog receiving processing portion 27, or the like. In the weak electrical field determining unit 52, an electrical field obtaining unit 54 obtains the field strength information, and a comparator 56 as the comparing unit compares whether the field strength is a weak electrical field or not. The weak electrical field is defined as a state of no more than a field strength in which an envelope by white noise is produced in the IF signal. The weak electrical field determining unit 52 controls so as to prohibit the operation of the ADF 21 in the field strength of no more than the weak electrical field. Accordingly, the operation of the ADF can be turned off when the field strength is weak, allowing reduction of the multipath noise and prevention of deterioration in a distortion property in the weak electrical field at the same time.

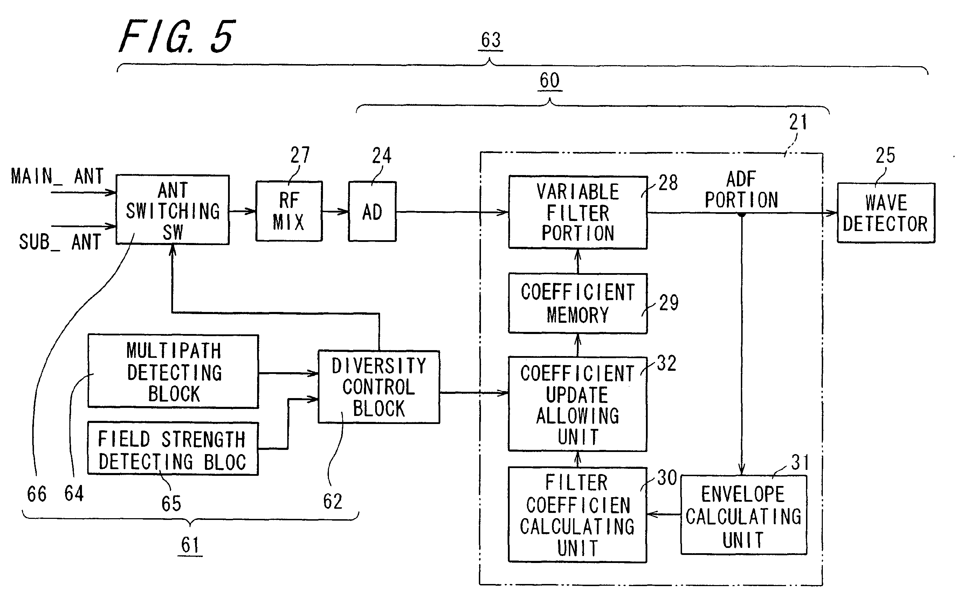

Fig. 5 shows a schematic configuration of a multipath noise reducing apparatus 60 as a reducing apparatus according to further still another embodiment of the invention. In the multipath noise reducing apparatus 60 provided in a receiving apparatus 63, reduction of the multipath noise is carried out in combination with a diversity reception by switching a main antenna (MAIN_ANT) and a sub antenna (SUB_ANT). A diversity receiving portion 61 allows a diversity control block 62 to function as a diversity switching determining unit as a determining unit to prohibit the operation of the ADF 21 at a time of the switching. The diversity receiving portion 61 includes a multipath detecting block 64, a field strength detecting block 65, and an antenna switching switch (hereinafter, abbreviated as an "ANT switching SW") 66, along with the diversity control block 62. The multipath detecting block 64 detects presence or absence of occurrence of the multipath, and the field strength detecting block 65 detects the field strength of a received radio wave. The ANT switching SW 66 is a switch for switching between a main antenna and a sub antenna, and the switching is controlled by the diversity control block 62.

In a diversity receiving operation, the IF signal to be inputted to the ADF 21 produces a sudden change at a time of switching the antenna. When the ADF 21 carries out a coefficient update in response to the change, a signal distortion and abnormal noise are produced. Therefore, the operation of the ADF 21 is prohibited at a time of switching operation in the diversity reception such as a switching of the antenna. Accordingly, reduction of the multipath noise and prevention of deterioration in a distortion property in the weak electrical field can be achieved at the same time.

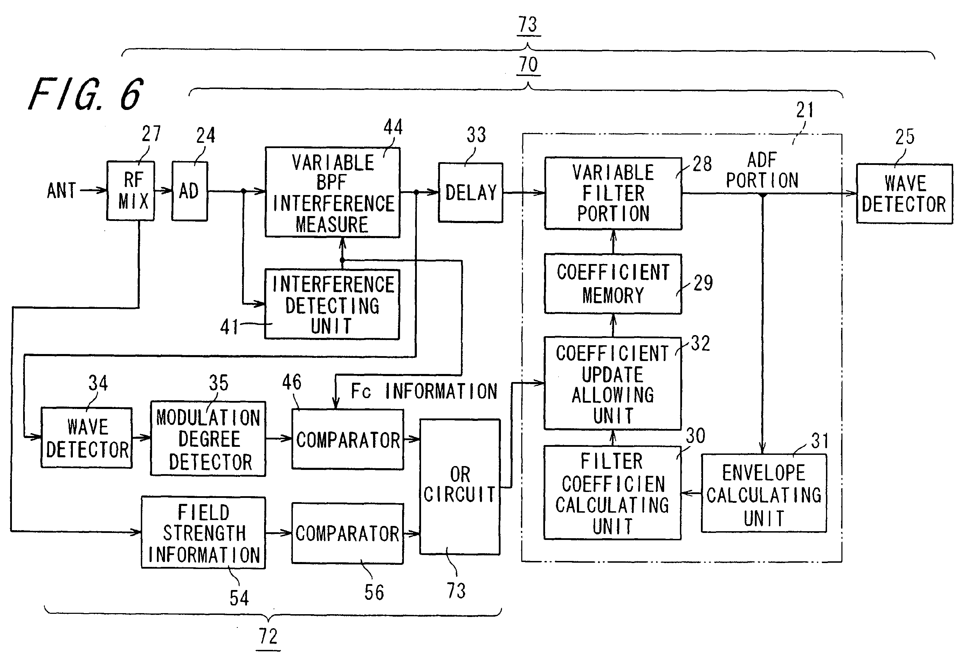

Fig. 6 shows a schematic configuration of a multipath noise reducing apparatus 70 as a reducing apparatus according to further still another embodiment of the invention. The multipath noise reducing apparatus 70 provided in a receiving apparatus 73 includes a condition determining unit 72 combining the overmodulation determining unit 42 in the multipath noise reducing apparatus 40 of Fig. 3 with the weak electrical field determining unit 52 of Fig. 4. That is, the overmodulation determining unit 42 includes the wave detector 34, the modulation degree detector 36 as the modulation degree detecting unit, and the comparator 46 as a first comparing unit. The weak electrical field determining unit 52 includes the electrical field information obtaining unit 54, and the comparator 56 as a second comparing unit. The condition determining unit 72 uses an OR circuit 73 to determine a logical addition (OR) of results determined by the comparators 46 and 56 with respect to the overmodulation and the weak electrical field, and prohibits the operation of the ADF 21 based on the determined results. When either of the overmodulation or the weak electrical field is fulfilled, the operation of the ADF 21 is prohibited, allowing realization of control having higher accuracy.

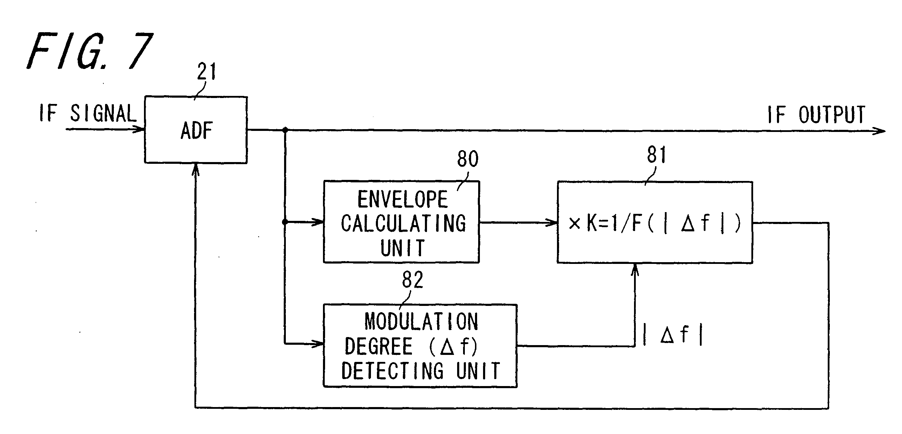

Fig. 7 shows a configuration in which an inverse function of a filter function of the variable BPF 44 is used as a coefficient updating method in the operation of the ADF 21. The overmodulation distortion is produced by the variable BPF 44 as a variable IF filter for removing an adjacent interference wave. When a bandwidth of the variable BPF 44 is narrowed, an amplitude change occurs in the IF signal. An envelope calculating unit 80 calculates the amplitude change. A filter coefficient calculating unit 81 calculates a correcting value K as $1/F(|\Delta f|)$. The value $\Delta f$ is detected by a modulation degree detecting unit 82. A function F is a reverse function of a filter function G.

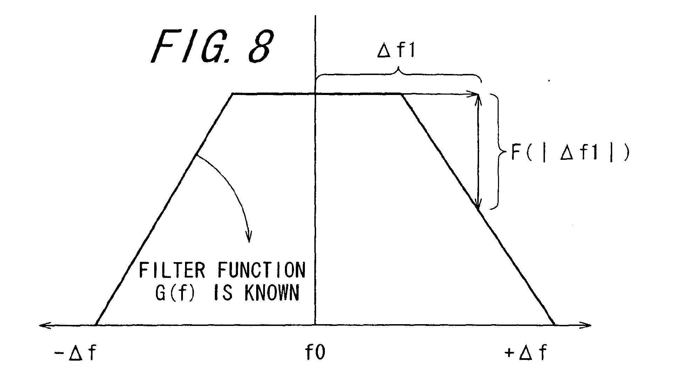

Fig. 8 shows a relationship between the IF signal and the filter function G(f) of the variable BPF 44. When an output signal of the envelope calculating unit 80 is brought close to 0 and is viewed from the ADF 21, an effect of the ADF 21 can be decreased by keeping an env value of Fig. 20 constant at a time of an intermodulation.

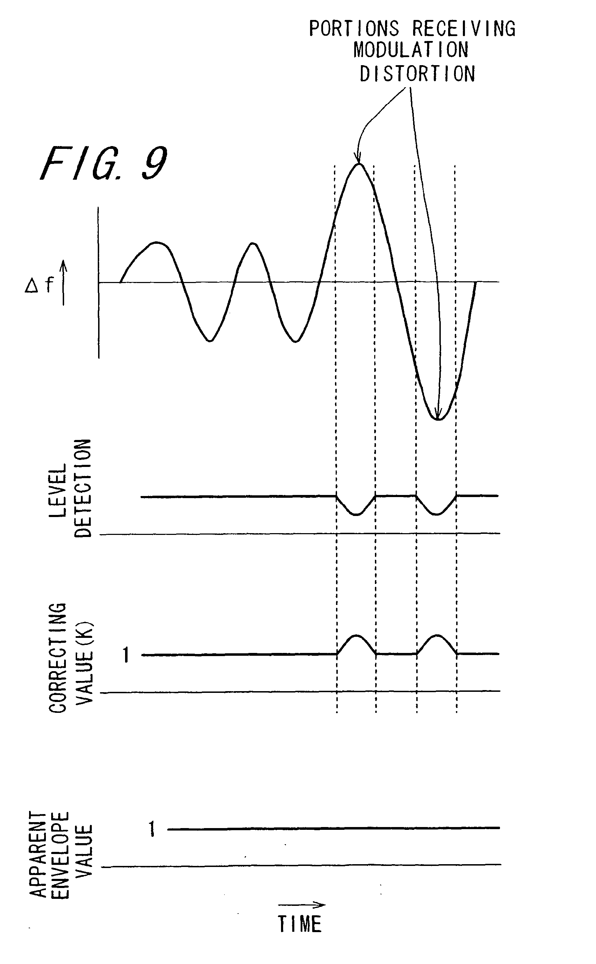

Fig. 9 shows a state in which an apparent envelope value viewed from the ADF 21 is fixed by the correcting value K.

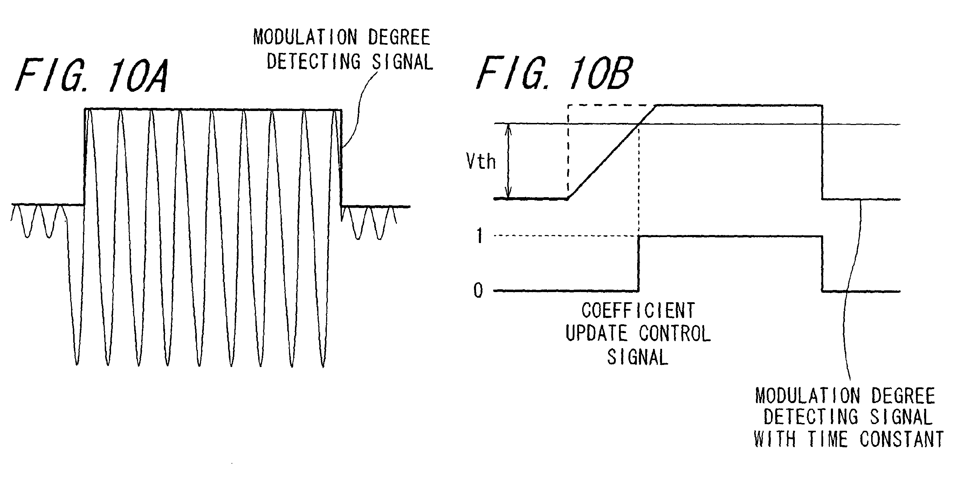

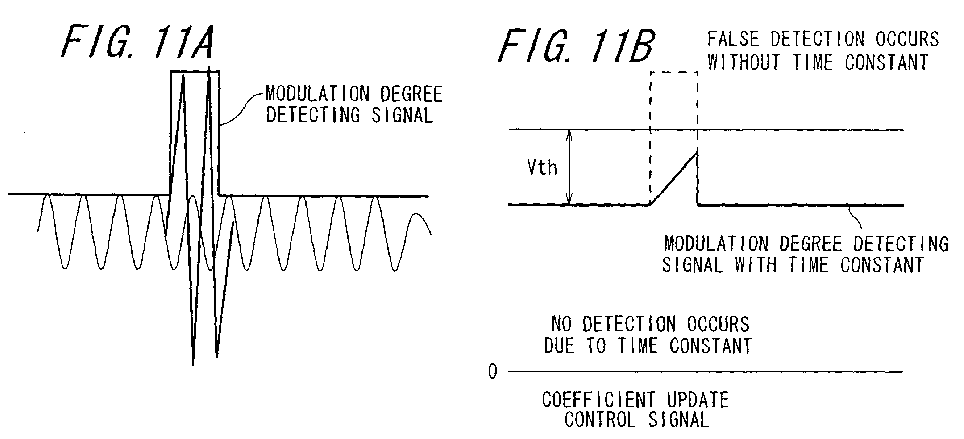

Figs. 10A, 10B, 11A, and 11B shows a state in which a modulation degree detecting signal outputted from the modulation degree detector 35 is changed depending on a time constant to prevent a false detection. Fig. 10B shows that a coefficient update control signal is turned on by changing the overmodulation detecting signal at a time of an overmodulation shown in Fig. 10A depending on the time constant, even though it takes some time for the coefficient update control signal for prohibiting the operation of the ADF 21 to increase to a threshold value Vth at which the coefficient update control signal is turned on. Fig. 11B shows that the modulation detecting signal at a time of occurrence of multipath noise shown in Fig. 11A has a short time period, and thereby the coefficient update control signal is not increased to the threshold value Vth even though the modulation degree detecting signal is changed depending on the time constant, and thereby the coefficient update control signal is kept off, the operation of the ADF 21 is not prohibited, and reduction of the multipath noise is continued.

The modulation degree detector 35 carries out detection of the overmodulation using a maximum value (MAXHOLD) of an FM detecting signal level. As shown in Fig. 11A, the FM detecting signal level is increased at a time of the occurrence of the multipath noise as well as at a time of the overmodulation. Therefore, there is a possibility that the operation of the ADF 21 is also prohibited at a time of the occurrence of the multipath noise, when the detection of the overmodulation is carried out using the modulation degree detecting signal. Consequently, in order to prevent such a situation, as shown in Fig. 11B, the modulation degree detecting signal is changed depending on the time constant to identify a time of the overmodulation and a time of the occurrence of the multipath noise. At a time of the overmodulation, an occurring time of the modulation degree detecting signal is increased, thereby allowing detection of the overmodulation to a satisfactory extent even when the modulation detecting signal is changed depending on the time constant.

As further still another embodiment of the invention, the operation of the ADF 21 may be prohibited at a time of a sudden change in electrical field by determining a time of the sudden change in electrical field and a time of the occurrence of the multipath noise. As a method for identifying a time of the sudden change in electrical field and a time of the occurrence of the multipath noise, the identification is achieved by determining presence or absence of a relationship between amplitude and a modulation. As a method for recognizing presence or absence of a relationship with the modulation, presence or absence of a singular point of the amplitude of the IF signal based on a modulation degree (a frequency shift) can be used.

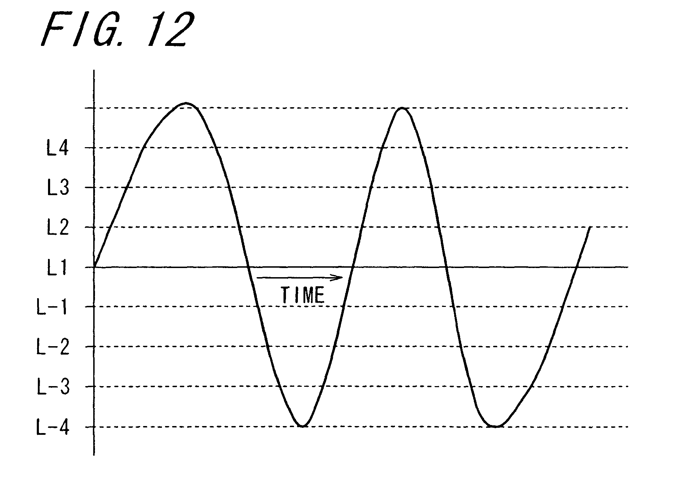

Fig. 12 shows a time change of the frequency shift $\Delta f$ of a signal obtained by detecting the IF signal. The frequency shift $\Delta f$ is divided by dividing the amplitude into a plurality of levels: L1, L2, ... , L-1, L-2, ... .

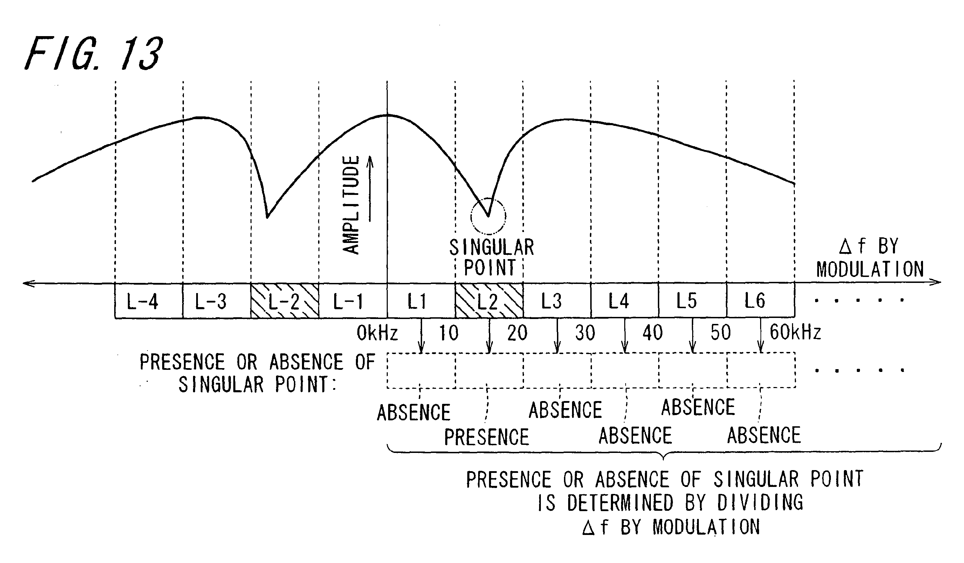

Fig. 13 shows that a singular point is produced in a relationship between divided levels of the frequency shift $\Delta f$ by a modulation and the amplitude. The singular point is detected as a point at which a certain level of a large change is produced or a sign is inverted by, for example, differentiating the amplitude by the frequency shift.

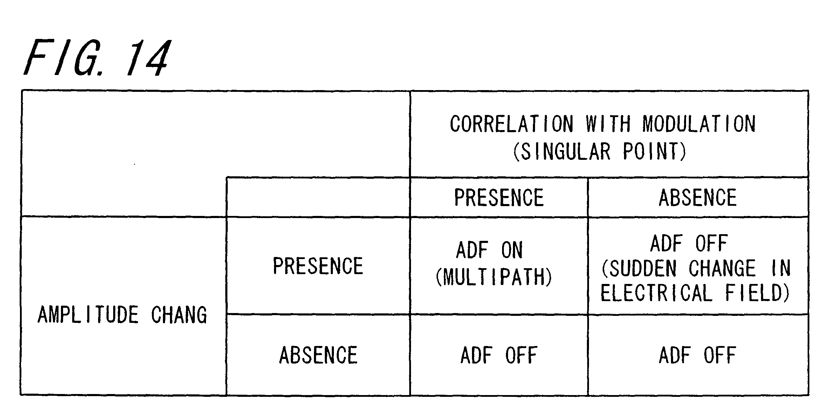

Fig. 14 shows criteria of ON/OFF in the operation of the ADF. When the amplitude has a change and the singular point, the ADF 21 is turned on as the occurrence of the multipath noise. When the amplitude has a change and no singular point, a decision is made as a time of the sudden change in electrical field, and the operation of the ADF 21 is turned off and prohibited. When the amplitude is not changed, the operation of the ADF 21 is turned off.

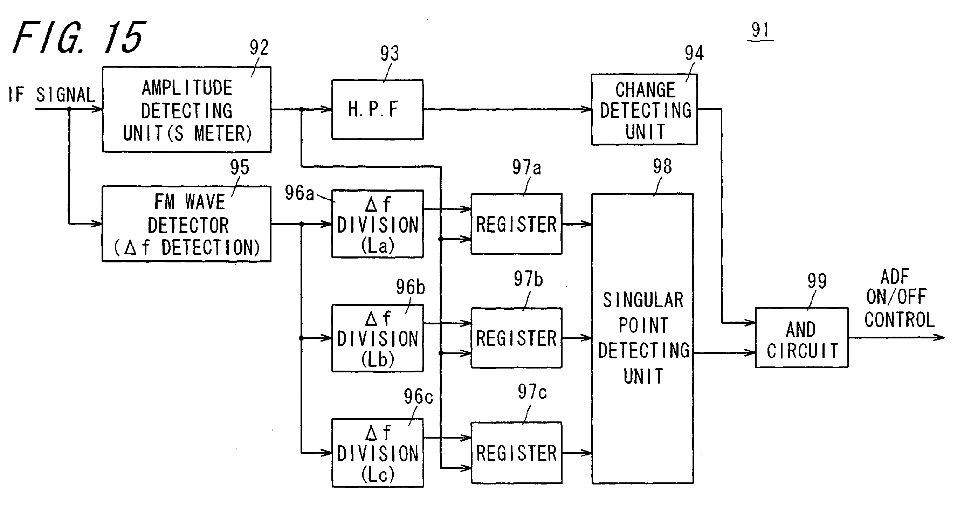

Fig. 15 shows a configuration for carrying out an ON/OFF switching of the operation of the ADF 21 as shown in Fig. 14. Electrical field sudden change determining unit 91 includes an amplitude detecting unit 92, a high-pass filter 93, a change detecting unit 94, and an FM detector 95. The amplitude detecting unit 92 detects the amplitude of the IF signal based on, for example, an S meter signal. The high-pass filter 93 allows a high-pass component to pass therethrough, and the change detecting unit 94 detects a changed portion. The FM detector 95 detects the IF signal to detect the frequency shift $\Delta f$. The frequency shift $\Delta f$ is divided into a plurality of levels such as La, Lb, and Lc by $\Delta f$ dividing units 95a, 95b, and 95c, and a singular point is detected based on amplitude stored in registers 97a, 97b, and 97c, respectively. An AND circuit 99 determines that the change detecting unit 94 detects a change, and a point detecting unit detects a singular point, and the operation at a time of the occurrence of the multipath is carried out as shown in Fig. 14. A singular point detecting unit 98 detects a level singular point stored in the registers 97a, 97b, and 97c.

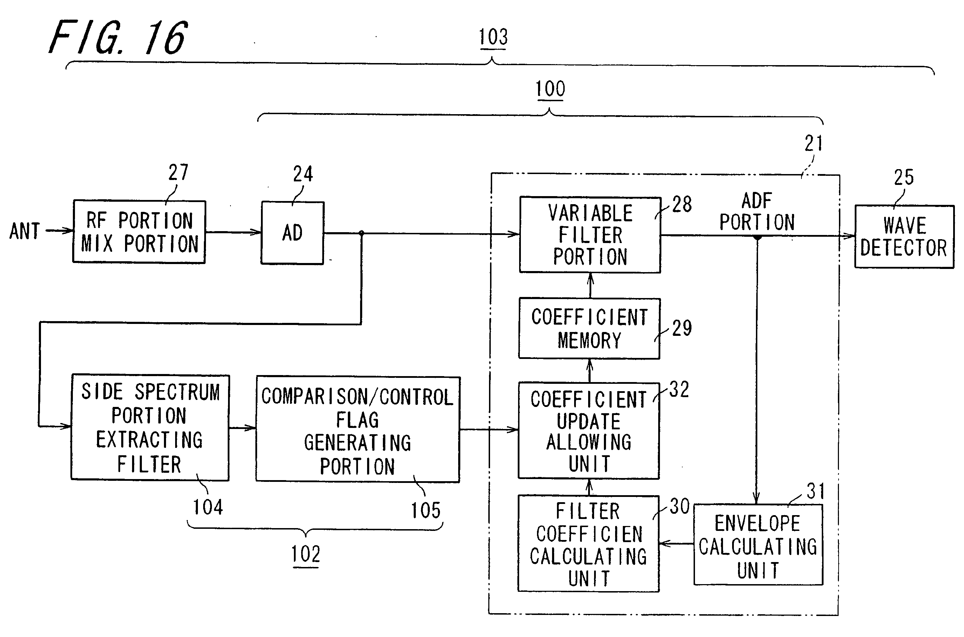

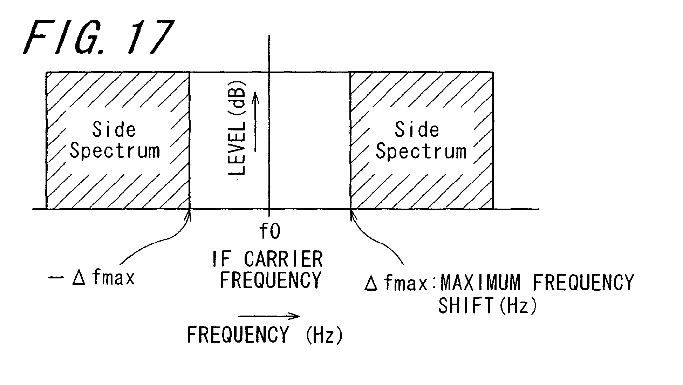

Fig. 16 shows a schematic configuration of a multipath noise reducing apparatus 100 as a reducing apparatus according to further still another embodiment of the invention. In the multipath noise reducing apparatus 100 provided in a receiving apparatus 103, the operation of the ADF 21 is prohibited when an exogenous noise determining unit 102 as a determining unit determines that the IF signal incorporates exogenous noise. In the receiving apparatus 103, the exogenous noise may be incorporated along with an objective radio wave. The exogenous noise determining unit 102 includes a side spectrum portion extracting filter 104, and a comparison/control flag generating portion 105. A frequency component of the exogenous noise resides in a full band. Therefore, the exogenous noise incorporated in the IF signal is detected by extracting a side spectrum portion out of a range of from -$\Delta$fmax to $\Delta$fmax shown in Fig. 17. However, it is preferable that no control is carried out for single-shot noise having a short generating time, and control is carried out so that the operation of the ADF 21 is prohibited in a zone in which the exogenous noise having a slightly long generating time is generated. The comparison/control flag generating portion 105 carries out the control based on the generating time by, for example, changing the modulation degree detecting signal depending on the time constant as shown in Figs. 10B and 11B.

Figs. 18A and 18B each show a schematic configuration of a receiving apparatus for a mobile object according to further still another embodiment of the invention. The receiving apparatus for a mobile object is realized by the receiving apparatuses 23, 43, 53, 63, 73, and 103 provided with the multipath noise reducing apparatuses 20, 40, 50, 60, 70, and 100 having the ADF 21, as shown in the above-described embodiments. As the receiving apparatus for a mobile object, examples include an automotive receiving apparatus of Fig. 18A, and a portable receiving apparatus of Fig. 18B. The receiving apparatus for a mobile object has a tendency to receive an effect of the multipath noise. Therefore, the above-described receiving apparatus for a mobile object having a tendency to receive an effect of the multipath noise is realized by the receiving apparatuses 23, 43, 53, 63, 73, and 103 provided with the multipath noise reducing apparatuses 20, 40, 50, 60, 70, and 100 according to the invention. Accordingly, defects in technique and performance according to the related art in reducing the multipath noise by use of the adaptive digital filter can be overcome so as to allow a radio wave signal to be received in a comfortable manner.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

INDUSTRIAL APPLICABILITY

According to the invention, a reducing apparatus comprises an adaptive digital filter, and includes a determining unit. The adaptive digital filter updates a filter coefficient of a variable filter so as to suppress an amplitude change of a received signal while detecting an amplitude changed portion of the received signal, in order to reduce an effect of a multipath produced in a process of propagation of a radio wave when receiving the radio wave modulated by a modulation method in which amplitude is not changed. The determining unit determines whether a condition that a received signal is deteriorated by a change of a coefficient of the adaptive digital filter is fulfilled or not. An update allowing unit suppresses an updating operation of the coefficient based on a determined result by the determining unit. Therefore, defects in technique and performance according to the related art in reducing multipath noise by use of the adaptive digital filter can be overcome so as to allow a radio wave signal to be received in a comfortable manner.

According to the invention, the determining unit determines whether an overmodulation is produced in the received signal or not. Therefore, based on the determined result, the update allowing unit suppresses an updating operation of the coefficient. Accordingly, the defects in technique and performance according to the related art in reducing multipath noise by use of the adaptive digital filter can be overcome so as to allow a radio wave signal to be received in a comfortable manner.

According to the invention, the determining unit determines whether the overmodulation is produced or not, based on comparison between a modulation degree and a predetermined frequency band. Therefore, it is possible to determine whether the overmodulation which produces an actual effect is produced or not.

According to the invention, it is determined whether the overmodulation is produced or not, based on an interference measure against an interference wave. Therefore, an effect of the overmodulation produced by the interference wave can be certainly removed.

According to the invention, the determining unit determines whether the overmodulation is produced or not, based on comparison between the modulation degree and a passband regulated by a bandpass filter. Therefore, it is possible to determine whether the overmodulation which produces an actual effect is produced or not.

According to the invention, the determining unit determines whether the overmodulation is produced or not, based on a signal changed depending on a time constant. Therefore, it is possible to prevent a false detection while the detection has no oversensitivity. When the overmodulation is actually produced, a modulation detecting signal continues for a long time compared with the multipath noise so as to allow the overmodulation to be detected to a satisfactory extent even though the modulation detecting signal is changed depending on the time constant, thereby sufficiently providing an effect to suppress an operation of the adaptive digital filter.

According to the invention, the operation of the adaptive digital filter is suppressed at a time of occurrence of a weak electrical field, as well as at a time of the overmodulation. Therefore, it is possible to avoid a situation in which the received signal is deteriorated all the more by the operation of the adaptive digital filter.

According to the invention, a comparing unit determines whether field strength information from the received signal obtained by an electrical filed obtaining unit represents the weak electrical field or not. When it is determined that the information represents the weak electrical field, the operation of the adaptive digital filter is suppressed. Therefore, the defects in technique and performance according to the related art in reducing multipath noise by use of the adaptive digital filter can be overcome so as to allow a radio wave signal to be received in a comfortable manner.

According to the invention, the determining unit determines whether a condition that the received signal is deteriorated by a change of the coefficient of the adaptive digital filter is fulfilled or not, based on presence or absence of a switching in association with a diversity receiving operation. When it is determined that the switching is present, the operation of the adaptive digital filter is suppressed. Therefore, the defects in technique and performance according to the related art in reducing multipath noise by use of the adaptive digital filter can be overcome so as to allow a radio wave signal to be received in a comfortable manner.

According to the invention, the determining unit determines whether a predetermined condition that the change of the coefficient of the adaptive digital filter deteriorates the received signal is fulfilled or not, based on presence or absence of occurrence of exogenous noise. When it is determined that the exogenous noise is produced, the operation of the adaptive digital filter is suppressed. Therefore, the defects in technique and performance according to the related art in reducing multipath noise by use of the adaptive digital filter can be overcome so as to allow a radio wave signal to be received in a comfortable manner.

According to the invention, the reducing apparatus comprises the adaptive digital filter, and includes an overmodulation determining unit, and a weak electrical field determining unit. The adaptive digital filter updates the filter coefficient of the variable filter so as to suppress an amplitude change of the received signal while detecting an amplitude changed portion of the received signal, in order to reduce an effect of the multipath produced in a process of propagation of the radio wave when receiving the radio wave modulated by a modulation method in which amplitude is not changed. The overmodulation determining unit determines whether the overmodulation is produced in the received signal or not, and the weak electrical field determining unit determines whether or not a field strength of the received signal is the weak electrical filed or less. In the overmodulation determining unit, a first comparing unit compares the modulation degree detected by a modulation degree detecting unit with the passband regulated by the bandpass filter. In the weak electrical determining unit, a second comparing unit determines whether the field strength information from the received signal obtained by an electrical field information obtaining unit represents the weak electrical field or not. The update allowing unit suppresses an updating operation of the coefficient based on a determined result of either of the overmodulation determining unit or the weak electrical field determining unit, thereby allowing control having higher accuracy. Therefore, the defects in technique and performance according to the related art in reducing multipath noise by use of the adaptive digital filter can be overcome so as to allow a radio wave signal to be received in a comfortable manner.

According to the invention, a receiving apparatus uses a converting unit to convert a signal received by an antenna into a digital signal, and carries out digital signal processing using the adaptive digital filter. The determining unit determines whether a condition that the change of the coefficient of the adaptive digital filter deteriorates the received signal is fulfilled or not. The update allowing unit suppresses an updating operation of the coefficient based on a determined result by the determining unit. Therefore, the defects in technique and performance according to the related art in reducing multipath noise by use of the adaptive digital filter can be overcome so as to allow a radio wave signal to be received in a comfortable manner.

According to the invention, the receiving apparatus uses the converting unit to convert a signal received by an antenna into a digital signal, and carries out the digital signal processing using the adaptive digital filter. The overmodulation determining unit determines whether the overmodulation is produced in the received signal or not, and the weak electrical field determining unit determines whether or not a field strength of the received signal is the weak electrical filed or less. In the overmodulation determining unit, the first comparing unit compares the modulation degree detected by the modulation degree detecting unit with the passband regulated by the bandpass filter. In the weak electrical determining unit, the second comparing unit determines whether the field strength information from the received signal obtained by an electrical field information obtaining unit represents the weak electrical field or not. The update allowing unit suppresses an updating operation of the coefficient based on a determined result of either of the overmodulation determining unit or the weak electrical field determining unit, thereby allowing control having higher accuracy. Therefore, the defects in technique and performance according to the related art in reducing multipath noise by use of the adaptive digital filter can be overcome so as to allow a radio wave signal to be received in a comfortable manner.

According to the invention, a receiving apparatus for a mobile object comprises the above-described reducing apparatus, and thereby can be preferably used for an automobile receiving apparatus or a portable receiving apparatus which has a tendency to have an effect of the multipath noise among other things, and there can be realized the receiving apparatus for a mobile object in which the defects in technique and performance according to the related art in reducing multipath noise by use of the adaptive digital filter can be overcome so as to allow a radio wave signal to be received in a comfortable manner.

According the invention, at a determining step, it is determined whether a condition that a signal is deteriorated by the change of the coefficient is fulfilled or not. When it is determined that the condition is fulfilled, an updating operation is suppressed at an update allowing step. Therefore, the defects in technique and performance according to the related art in reducing multipath noise by use of the adaptive digital filter can be overcome so as to allow a radio wave signal to be received in a comfortable manner.

According to the invention, at an overmodulation determining step, it is determined whether the overmodulation is produced in a signal or not, and at a weak electrical determining step, it is determined whether or not a field strength of the signal is the weak electrical field or less. At the overmodulation determining step, a first comparing step compares the modulation degree detected at a modulation degree detecting step with the passband regulated by the bandpass filter. At the weak electrical determining step, a second comparing step determines whether the field strength information from the received signal obtained by an electrical field information obtaining step represents the weak electrical field or not. At an update allowing step, an updating operation of the coefficient is suppressed based on a determined result of either of the overmodulation determining step or the weak electrical field determining step, thereby allowing control having higher accuracy. Therefore, the defects in technique and performance according to the related art in reducing multipath noise by use of the adaptive digital filter can be overcome so as to allow a radio wave signal to be received in a comfortable manner.

**Claims**

1. Multipath noise reduction apparatus (20,40,50,60,70) comprising:

   an adaptive digital filter(21) for reducing an effect of multipath noise on a received frequency modulated signal; and
   a determining unit (22,42,52,62,72) for determining whether a change in coefficient will deteriorate the received signal,
   the adaptive digital filter(21) including:

      a calculating unit (31) for calculating a coefficient for reducing an effect of multipath noise on the received signal;
      an updating unit (29) for updating the calculated coefficient; and
      an update allowing unit (32) for suppressing an updating operation by the updating unit of the coefficient based on a result determined by the determining unit.

2. The apparatus of claim 1, wherein the determining unit (22,42,52,62,72) determines whether an overmodulation is produced in the received signal or not.

3. The apparatus of claim 2, wherein the determining unit (22,42,52,62,72) includes a modulation degree detecting unit (35) for detecting a modulation degree from a frequency shift amount of the received signal, and a comparing unit (36) for comparing the modulation degree with a predetermined frequency band.

4. The apparatus of claim 2, wherein the determining unit (22,42,52,62,72) determines whether the overmodulation is produced or not, based on an interference measurement made of an interference wave.

5. The apparatus of claim 4, further comprising:

   an interference wave detecting unit (41) for detecting presence or absence of an interference wave; and
   a bandpass filter (44) for regulating a passband of the received signal based on the interference wave detected by the interference wave detecting unit,
   the determining unit (22,42,52,62,72) including a modulation degree detecting unit for detecting a modulation degree from a frequency shift amount of the received signal, and a comparing unit for comparing the modulation degree with the passband regulated by the bandpass filter(44).

6. The apparatus of claim 2 or 4, wherein the determining unit (22,42,52,62,72) determines whether the overmodulation is produced or not in the received signal, based on a signal changing in accordance with a time constant.

7. The apparatus of claim 1, wherein the determining unit (22,42,52,62,72) determines whether or not a field strength of the received signal is a weak electrical field or less.

8. The apparatus of claim 7, wherein the determining unit (22,42,52,62,72) includes an electrical field information obtaining unit (54) for obtaining field strength information from the received signal, and a comparing unit (56) for comparing whether the field strength information represents a weak electrical field or not.

9. The apparatus of claim 1, wherein the determining unit (22,42,52,62,72) determines presence or absence of an antenna switching in association with a diversity receiving operation.

10. The apparatus of claim 1, wherein the determining unit (22,42,52,62,72) determines whether external noise is produced in the received signal or not.

11. The apparatus of any preceding claim further comprising:

an antenna (26) for receiving a signal;
a converting unit (24) for converting a received signal into a digital signal.

12. A receiving apparatus for a mobile object comprising the reducing apparatus of claim 1.

13. The receiving apparatus for a mobile object of claim 12, being used for an automotive receiving apparatus.

14. The receiving apparatus for a mobile object of claim 12, being used for a portable receiving apparatus.

15. A method of reducing multipath noise on a signal comprising:

a coefficient calculating step for calculating a coefficient for reducing an effect of multipath noise on a signal;
a determining step for determining whether the signal is deteriorated by updating the coefficient;
an updating step for updating the coefficient based on the calculated coefficient; and
an update allowing step for suppressing the updating step of updating the coefficient, based on the determined result.

16. The method according to claim 15 further comprising:

an overmodulation determining step for determining whether an overmodulation is produced in the signal or not;
a weak electrical field determining step for determining whether or not a field strength of the signal is a weak electrical field or less:
the update allowing step for suppressing the updating step of updating the coefficient based on a determined result by either the overmodulation determining step or the weak electrical field determining step.

17. The method of claim 16, wherein the overmodulation determining step includes a modulation degree detecting step for detecting a modulation degree from a frequency shift amount of the signal, and a first comparing step for comparing the modulation degree with a passband regulated by a bandpass filter, and
the weak electrical field determining step includes an electrical filed information obtaining step for obtaining a field strength information from the signal, and a second comparing step for comparing whether the field strength information represents a weak electrical field or not.

**Patentansprüche**

1. Vorrichtung zum Reduzieren von Mehrwegerauschen (20, 40, 50, 60, 70), Folgendes umfassend:

einen adaptiven digitalen Filter (21) zum Reduzieren einer Auswirkung von Mehrwegerauschen auf ein empfangenes frequenzmoduliertes Signal und
eine Bestimmungseinheit (22, 42, 52, 62, 72) zum Bestimmen, ob eine Änderung des Koeffizienten das empfangene Signal verschlechtern wird,
wobei der adaptive digitale Filter (21) Folgendes aufweist:

eine Berechnungseinheit (31) zum Berechnen eines Koeffizienten zum Reduzieren einer Auswirkung von Mehrwegerauschen auf das empfangene Signal,
eine Aktualisierungseinheit (29) zum Aktualisieren des berechneten Koeffizienten und
eine Aktualisierungsermächtigungseinheit (32) zum Unterdrücken eines Aktualisierungsvorganges durch die Einheit zum Aktualisieren des Koeffizienten basierend auf einem durch die Bestimmungseinheit bestimmten Ergebnis.

2. Vorrichtung nach Anspruch 1, wobei die Bestimmungseinheit (22, 42, 52, 62, 72) bestimmt, ob im empfangenen Signal eine Übermodulation erzeugt ist oder nicht.

3. Vorrichtung nach Anspruch 2, wobei die Bestimmungseinheit (22, 42, 52, 62, 72) eine Modulationsgrad-Erkennungseinheit (35) zum Erkennen eines Modulationsgrades aus einem Frequenzverschiebungsumfang des empfangenen Signals, und eine Vergleichseinheit (36) zum Vergleichen des Modulationsgrades mit einem vorbestimmten Frequenzband aufweist.

4. Vorrichtung nach Anspruch 2, wobei die Bestimmungseinheit (22, 42, 52, 62, 72) basierend auf einer an einer Interferenzwelle vorgenommenen Interferenzmessung bestimmt, ob die Übermodulation erzeugt ist oder nicht.

5. Vorrichtung nach Anspruch 4, ferner Folgendes umfassend:

eine Interferenzwellen-Erkennungseinheit (41) zum Erkennen des Vorhandenseins oder Nichtvorhandenseins einer Interferenzwelle und
einen Bandpassfilter (44) zum Regulieren eines Durchlassbandes des empfangenen Signals basierend auf der durch die Interferenzwellen-Erkennungseinheit erkannten Interferenzwelle,
wobei die Bestimmungseinheit (22, 42, 52, 62, 72) eine Modulationsgrad-Erkennungseinheit zum Erkennen eines Modulationsgrades aus einem Frequenzverschiebungsumfang des empfangenen Signals und eine Vergleichseinheit zum Vergleichen des Modulationsgrades mit dem vom Bandpassfilter (44) regulierten Durchlassband aufweist.

6. Vorrichtung nach Anspruch 2 oder 4, wobei die Bestimmungseinheit (22, 42, 52, 62, 72) basierend auf einer Signaländerung in Übereinstimmung mit einer Zeitkonstante bestimmt, ob im empfangenen Signal die Übermodulation erzeugt ist oder nicht.

7. Vorrichtung nach Anspruch 1, wobei die Bestimmungseinheit (22, 42, 52, 62, 72) bestimmt, ob eine Feldstärke des empfangenen Signals einem schwachen elektrischen Feld oder weniger entspricht oder nicht.

8. Vorrichtung nach Anspruch 7, wobei die Bestimmungseinheit (22, 42, 52, 62, 72) eine Einheit (54) zum Gewinnen von Informationen über das elektrische Feld zum Gewinnen von Feldstärkeinformationen aus dem empfangenen Signal und eine Vergleichseinheit (56) zum Vergleichen, ob die Feldstärkeinformationen ein schwaches elektrisches Feld zeigen oder nicht, aufweist.

9. Vorrichtung nach Anspruch 1, wobei die Bestimmungseinheit (22, 42, 52, 62, 72) das Vorhandensein oder Nichtvorhandensein einer Antennenumschaltung in Verbindung mit einem Diversity-Empfangsvorgang bestimmt.

10. Vorrichtung nach Anspruch 1, wobei die Bestimmungseinheit (22, 42, 52, 62, 72) bestimmt, ob im empfangenen Signal externes Rauschen erzeugt ist oder nicht.

11. Vorrichtung nach einem der vorhergehenden Ansprüche, ferner Folgendes umfassend:

eine Antenne (26) zum Empfang eines Signals,
eine Umwandlungseinheit (24) zum Umwandeln eines empfangenen Signals in ein digitales Signal.

12. Empfangsvorrichtung für ein mobiles Objekt, welche die Vorrichtung zum Reduzieren nach Anspruch 1 umfasst.

**13.** Empfangsvorrichtung für ein mobiles Objekt nach Anspruch 12, die für eine Fahrzeugempfangsvorrichtung verwendet wird.

**14.** Empfangsvorrichtung für ein mobiles Objekt nach Anspruch 12, die für eine transportable Empfangsvorrichtung verwendet wird.

**15.** Verfahren zum Reduzieren von Mehrwegerauschen in einem Signal, Folgendes umfassend:

einen Koeffizientenberechnungsschritt zum Berechnen eines Koeffizienten zum Reduzieren einer Auswirkung von Mehrwegerauschen auf ein Signal,
einen Bestimmungsschritt zum Bestimmen, ob das Signal durch das Aktualisieren des Koeffizienten verschlechtert wird,
einen Aktualisierungsschritt zum Aktualisieren des Koeffizienten basierend auf dem berechneten Koeffizienten und
einen Aktualisierungsermächtigungsschritt zum Unterdrücken des Aktualisierungsschrittes zum Aktualisieren des Koeffizienten basierend auf dem bestimmten Ergebnis.

**16.** Verfahren nach Anspruch 15, ferner Folgendes umfassend:

einen Übermodulationsbestimmungsschritt zum Bestimmen, ob im Signal eine Übermodulation erzeugt ist oder nicht,
einen Schritt zum Bestimmen eines schwachen elektrischen Feldes zum Bestimmen, ob eine Feldstärke des Signals einem schwachen elektrischen Feld oder weniger entspricht oder nicht,
den Aktualisierungsermächtigungsschritt zum Unterdrücken des Aktualisierungsschrittes zum Aktualisieren des Koeffizienten basierend auf einem bestimmten Ergebnis aus entweder dem Übermodulationsbestimmungsschritt oder aus dem Schritt zum Bestimmen eines schwachen elektrischen Feldes.

**17.** Verfahren nach Anspruch 16, wobei der Übermodulationsbestimmungsschritt einen Modulationsgrad-Erkennungsschritt zum Erkennen eines Modulationsgrades aus einem Frequenzverschiebungsumfang des Signals und einen ersten Vergleichsschritt zum Vergleichen des Modulationsgrades mit einem vom Bandpassfilter regulierten Durchlassband aufweist und
der Schritt zum Bestimmen eines schwachen elektrischen Feldes einen Schritt zum Gewinnen von Informationen über das elektrische Feld zum Gewinnen von Feldstärkeinformationen aus dem empfangenen Signal und einen zweiten Vergleichsschritt zum Vergleichen, ob die Feldstärkeinformationen ein schwaches elektrisches Feld zeigen oder nicht, aufweist.

## Revendications

**1.** Appareil de réduction de bruit à trajet multiple (20, 40, 50, 60, 70) comprenant :

un filtre numérique adaptable (21) permettant de réduire un effet de bruit à trajet multiple sur un signal reçu modulé en fréquence ; et
une unité de détermination (22, 42, 52, 62, 72) permettant de déterminer si un changement de coefficient va détériorer le signal reçu,
le filtre numérique adaptable (21) comprenant :
une unité de calcul (31) permettant de calculer un coefficient de réduction d'un effet de bruit à trajet multiple sur le signal reçu ;
une unité de mise à jour (29) permettant de mettre à jour le coefficient calculé ; et
une unité d'autorisation de mise à jour (32) permettant de supprimer une opération de mise à jour par l'unité de mise à jour du coefficient d'après un résultat déterminé par l'unité de détermination.

**2.** Appareil selon la revendication 1, dans lequel l'unité de détermination (22, 42, 52, 62, 72) détermine si une surmodulation est produite dans le signal reçu ou non.

**3.** Appareil selon la revendication 2, dans lequel l'unité de détermination (22, 42, 52, 62, 72) comprend une unité de détection de degré de modulation (35) permettant de détecter un degré de modulation à partir d'une quantité de glissement de fréquence du signal reçu, et une unité de comparaison (36) permettant de comparer le degré de modulation à une bande de fréquence prédéterminée.

4. Appareil selon la revendication 2, dans lequel l'unité de détermination (22, 42, 52, 62, 72) détermine si la surmodulation est produite ou non, d'après une mesure d'interférence effectuée sur une onde d'interférence.

5. Appareil selon la revendication 4, comprenant en outre :

une unité de détection d'onde d'interférence (41) permettant de détecter la présence ou l'absence d'une onde d'interférence ; et
un filtre passe-bande (44) permettant de réguler une bande passante du signal reçu d'après l'onde d'interférence détectée par l'unité de détection d'onde d'interférence,
l'unité de détermination (22, 42, 52, 62, 72) comprenant une unité de détection de degré de modulation permettant de détecter un degré de modulation à partir d'une quantité de glissement de fréquence du signal reçu, et une unité de comparaison permettant de comparer le degré de modulation à la bande passante régulée par le filtre passe-bande (44).

6. Appareil selon la revendication 2 ou 4, dans lequel l'unité de détermination (22, 42, 52, 62, 72) détermine si la surmodulation est produite ou non dans le signal reçu, d'après un signal changeant selon une constante de temps.

7. Appareil selon la revendication 1, dans lequel l'unité de détermination (22, 42, 52, 62, 72) détermine si une intensité de champ du signal reçu est ou non un champ électrique faible ou moins.

8. Appareil selon la revendication 7, dans lequel l'unité de détermination (22, 42, 52, 62, 72) comprend une unité d'obtention d'informations de champ électrique (54) permettant d'obtenir des informations d'intensité de champ à partir du signal reçu, et une unité de comparaison (56) permettant de comparer si les informations d'intensité de champ représentent un champ électrique faible ou pas.

9. Appareil selon la revendication 1, dans lequel l'unité de détermination (22, 42, 52, 62, 72) détermine la présence ou l'absence d'une commutation d'antenne en association avec une opération de réception de diversité.

10. Appareil selon la revendication 1, dans lequel l'unité de détermination (22, 42, 52, 62, 72) détermine si un bruit externe est produit dans le signal reçu ou non.

11. Appareil selon l'une quelconque des revendications précédentes, comprenant en outre :

une antenne (26) permettant de recevoir un signal ;
une unité de conversion (24) permettant de convertir un signal reçu en un signal numérique.

12. Appareil de réception pour un objet mobile comprenant l'appareil de réduction selon la revendication 1.

13. Appareil de réception pour un objet mobile selon la revendication 12, utilisé pour un appareil de réception d'automobile.

14. Appareil de réception pour un objet mobile selon la revendication 12, utilisé pour un appareil de réception portable.

15. Procédé de réduction de bruit à trajet multiple sur un signal comprenant :

une étape de calcul de coefficient permettant de calculer un coefficient de réduction d'un effet de bruit à trajet multiple sur un signal ;
une étape de détermination permettant de déterminer si le signal est détérioré par la mise à jour du coefficient ;
une étape de mise à jour permettant de mettre à jour le coefficient d'après le coefficient calculé ; et
une étape d'autorisation de mise à jour permettant de supprimer l'étape de mise à jour consistant à mettre à jour le coefficient, d'après le résultat déterminé.

16. Procédé selon la revendication 15, comprenant en outre :

une étape de détermination de surmodulation permettant de déterminer si une surmodulation est produite dans le signal ou non ;

une étape de détermination de champ électrique faible permettant de déterminer si une intensité de champ du signal est un champ électrique faible ou moins ;

l'étape d'autorisation de mise à jour permettant de supprimer l'étape de mise à jour consistant à mettre à jour le coefficient, d'après un résultat déterminé par soit l'étape de détermination de surmodulation, soit l'étape de détermination de champ électrique faible.

17. Procédé selon la revendication 16, dans lequel l'étape de détermination de surmodulation comprend une étape de détection de degré de modulation permettant de détecter un degré de modulation à partir d'une quantité de glissement de fréquence du signal, et une première étape de comparaison permettant de comparer le degré de modulation à une bande passante régulée par un filtre passe-bande, et

l'étape de détermination de champ électrique faible comprend une étape d'obtention d'informations de champ électrique permettant d'obtenir des informations d'intensité de champ à partir du signal, et une seconde étape de comparaison permettant de comparer si les informations d'intensité de champ représentent un champ électrique faible ou non.

# FIG. 1

EP 1 865 607 B1

FIG. 2A

ADF OFF

FIG. 2B

ADF ON

DETERIORATION IN DISTORTION

FIG. 3

ANT → RF MIX (27) → AD (24) → VARIABLE BPF INTERFERENCE MEASURE (44) → DELAY (33) → VARIABLE FILTER PORTION (28) → ADF PORTION → WAVE DETECTOR (25)

INTERFERENCE DETCTING UNIT (41)

Fc INFORMATION

WAVE DETECTOR (34) → MODULATION DEGREE DETECTOR (35) → COMPARATOR (46)

(42)

ADF PORTION (21)

ENVELOPE CALCULATING UNIT (31)

VARIABLE FILTER PORTION (28)

COEFFICIENT MEMORY (29)

COEFFICIENT UPDATE ALLOWING UNIT (32)

FILTER COEFFICIEN CALCULATING UNIT (30)

(43) (40)

20

# FIG. 4

EP 1 865 607 B1

## FIG. 5

MAIN_ ANT →

SUB_ ANT →

ANT SWITCHING SW

27
RF MIX

24
AD

60

63

21

28
VARIABLE FILTER PORTION

ADF PORTION

25
WAVE DETECTOR

29
COEFFICIENT MEMORY

32
COEFFICIENT UPDATE ALLOWING UNIT

MULTIPATH DETECTING BLOCK

DIVERSITY CONTROL BLOCK

FIELD STRENGTH DETECTING BLOC

30
FILTER COEFFICIEN CALCULATING UNIT

31
ENVELOPE CALCULATING UNIT

66  64

65

62

61

EP 1 865 607 B1

FIG. 6

EP 1 865 607 B1

# FIG. 7

IF SIGNAL → [ ADF 21 ] → IF OUTPUT

80 ENVELOPE CALCULATING UNIT

81 ×K=1/F( | Δf | )

82 MODULATION DEGREE (Δf) DETECTING UNIT

| Δf |

EP 1 865 607 B1

*FIG. 8*

$\triangle$ f1

$F( | \triangle f1 | )$

FILTER FUNCTION
G(f) IS KNOWN

$-\triangle$ f          f0          $+\triangle$ f

PORTIONS RECEIVING
MODULATION
DISTORTION

*FIG. 9*

Δf

LEVEL
DETECTION

CORRECTING
VALUE (K)

1

APPARENT
ENVELOPE
VALUE

1

TIME

*FIG. 10A*

MODULATION DEGREE DETECTING SIGNAL

*FIG. 10B*

Vth

1

0

COEFFICIENT UPDATE CONTROL SIGNAL

MODULATION DEGREE DETECTING SIGNAL WITH TIME CONSTANT

# FIG. 11A

MODULATION DEGREE
DETECTING SIGNAL

# FIG. 11B

FALSE DETECTION OCCURS
WITHOUT TIME CONSTANT

$V_{th}$

MODULATION DEGREE DETECTING
SIGNAL WITH TIME CONSTANT

NO DETECTION OCCURS
DUE TO TIME CONSTANT

0

COEFFICIENT UPDATE
CONTROL SIGNAL

EP 1 865 607 B1

*FIG. 12*

# FIG. 13

AMPLITUDE

SINGULAR POINT

Δf BY MODULATION

| L-4 | L-3 | L-2 | L-1 | L1 | L2 | L3 | L4 | L5 | L6 | · · · · · |

0kHz   10   20   30   40   50   60kHz

PRESENCE OR ABSENCE OF SINGULAR POINT:

ABSENCE      ABSENCE      ABSENCE
     PRESENCE      ABSENCE      ABSENCE

PRESENCE OR ABSENCE OF SINGULAR POINT
IS DETERMINED BY DIVIDING
Δf BY MODULATION

## FIG. 14

| | | CORRELATION WITH MODULATION (SINGULAR POINT) | |
| --- | --- | --- | --- |
| | | PRESENCE | ABSENCE |
| AMPLITUDE CHANG | PRESENCE | ADF ON (MULTIPATH) | ADF OFF (SUDDEN CHANGE IN ELECTRICAL FIELD) |
| | ABSENCE | ADF OFF | ADF OFF |

# FIG. 15

# FIG. 16

EP 1 865 607 B1

# FIG. 17

Side
Spectrum

LEVEL (dB)

Side
Spectrum

f0

IF CARRIER
FREQUENCY

— Δfmax

Δfmax: MAXIMUM FREQUENCY
SHIFT (Hz)

FREQUENCY (Hz)

## FIG. 18A

RECEIVING APPARATUS

ADF

SOUND

23,43,53,63,73,103

21

## FIG. 18B

23,43,53,63,73,103

RECEIVING APPARATUS

ADF

SOUND

21

# FIG. 19

EP 1 865 607 B1

*FIG. 20*

IF SIGNAL x(n)

cos(2πfc/fs)

sin(2πfc/fs)

DECOMPOSE INTO
I SIGNAL
AND Q SIGNAL

12

X

13

X

xi(n)

xq(n)

2

8

VARIABLE
FILTER
PORTION

yi(n)

yq(n)

a(n)    b(n)

FILTER
COEFFICIENT
UPDATING
PORTION

9, 10

e(n)

ENVELOPE ERROR
CALCULATING
PORTION

11

5

FM
DETECTOR

Fs = SAMPLING FREQUENCY
Fc = IF CARRIER FREQUENCY

EP 1 865 607 B1

FIG. 21

**EP 1 865 607 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050053177 A
- JP 3354286 B